(19) **Europäisches Patentamt / European Patent Office / Office européen des brevets**

(11) **EP 2 320 581 B1**

(12) **EUROPEAN PATENT SPECIFICATION**

(45) Date of publication and mention
of the grant of the patent:
**30.10.2013 Bulletin 2013/44**

(51) Int Cl.:
*H04B 10/25* (2013.01)          *H04B 10/80* (2013.01)
*H04B 10/2575* (2013.01)

(21) Application number: **09306080.4**

(22) Date of filing: **10.11.2009**

(54) **A method for transmission of a data signal using an amplifier, an amplifier, a transmitting device, and a receiving device therefor**

Verfahren zur Übertragung eines Datensignals mithilfe eines Verstärkers, Verstärker, Übertragungsvorrichtung und Empfangsvorrichtung dafür

Procédé de transmission d'un signal de données utilisant un amplificateur, amplificateur, dispositif de transmission et dispositif de réception correspondant

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**11.05.2011 Bulletin 2011/19**

(73) Proprietor: **Alcatel Lucent
75007 Paris (FR)**

(72) Inventors:
• **Wiegner, Dirk
71409, Schwaikeim (DE)**
• **Pascht, Andreas
73635 Rudersberg (DE)**
• **Jüschke, Patrick
75428, Illingen (DE)**

(74) Representative: **Kleinbub, Oliver
Alcatel Lucent
Intellectual Property & Standards
Lorenzstrasse 10
70435 Stuttgart (DE)**

(56) References cited:
**US-A- 5 331 453          US-A- 5 777 771
US-A1- 2003 090 777     US-A1- 2005 226 625**

• **WAKE D ET AL: "Optically Powered Remote Units for Radio-Over-Fiber Systems" JOURNAL OF LIGHTWAVE TECHNOLOGY, IEEE SERVICE CENTER, NEW YORK, NY, US, vol. 25, no. 15, 1 August 2008 (2008-08-01), pages 2484-2491, XP011236461 ISSN: 0733-8724**

**Description**

The invention relates to a method for transmission of a data signal according to the preamble of claim 1, an amplifier according to the preamble of claim 8, a transmitting device according to the preamble of claim 10, and a receiving device according to the preamble of claim 13.

The coverage of a certain service area in a cellular radio network is provided by several radio base stations, which are connected to a core network to serve connections to and from mobile users within the service area. A radio base station contains a baseband unit and at least one antenna unit. In order to increase radio coverage and capacity, modern base stations use several sector antennas.

In order to increase flexibility of the base stations, it is desirable to allow the antennas to be located remote from the baseband unit. This has lead to the development of active antenna systems which are also termed remote antenna heads. Typically, one remote antenna head contains one sector antenna, but there are also systems known, which have remote antenna heads with more than only one sector antenna.

The base stations are preferably connected with the remote antenna heads by means of optical fibers. Conventional radio-over-fiber scenarios involve optical transmission of analogue signals between a base station and a transmitter with an amplifier in a remote antenna head.

An example for the implementation of a radio-over-fiber concept in a cellular radio network using a two-fiber-ring is given in the European patent EP 1553791 B1.

In the US patent application US 2003/0090777 A1, a method is disclosed for transmission of data signals over an optical connection from a transmitting device to a receiving device, wherein data signals are amplified in the transmitting device by means of RF-modulated lasers and optical fiber amplifiers. In order to overcome e.g. propagation losses in the opticalfiber cable, and in order to attain the levels the photodetecors can handle, optical fiber amplifiers are used for amplification in the optical domain right before the receiving device.

In the US patent US 5, 777, 771, a method is disclosed for transmission of data signals over an optical connection from a transmitting device to a receiving device, wherein data signals are modulated on laser light by means of a Mach-Zehnder optical modulator, and the data signals are converted to the electrical domain in a photo detector and then amplified in the amplifier in the receiving device.

However, the quality of the optical transmission suffers severely from noise, non-linearities, like e.g. chromatic dispersion, and attenuation effects. Consequently the technical implementations for radio-over-fiber concepts must involve highly sophisticated optical modulation techniques and signal conditioning.

Basically, the optical transmission of analogue radio frequency signals involves high electronic efforts for signal modulation techniques and signal conditioning. Indeed, e.g. the method of intensity modulation and direct detection is straightforward, simple and allows for fairly linear optical transmission properties, but on the other hand it requires costly modulators and modulator drivers in order to meet the requirements for analogue radio frequency transmission. In case double side band modulation is used, chromatic dispersion will result in frequency and length dependent suppression of radio frequency power, which will deteriorate the transmission quality.

The object of the invention is thus to propose a cost-effective and fault-tolerant method for transmission of signals from a transmitting device to at least one receiving device using a power amplifier for signal amplification with an optical connection between the transmitting device and the at least one receiving device.

This object is achieved by a method according to the teaching of claim 1, an amplifier according to the teaching of claim 8, a transmitting device according to the teaching of claim 10, and a receiving device according to the teaching of claim 13.

As mobile communication systems like e.g. Universal Mobile Telecommunications System (UMTS), Worldwide Interoperability for Microwave Access (WIMAX), or Third Generation Partnership Project Long Term Evolution (3GPP LTE) require power amplifiers with high output power at frequencies up to 2.6 GHz, so-called CLIER amplifiers (CLIER = Combination of LINC and EER), which are based on a combination of the so-called LINC and the so-called EER method (LINC = linear amplification by nonlinear components; EER = Envelope Elimination and Restoration) are used for signal amplification, as they feature a high degree of linearity and efficiency.

In said CLIER amplifiers, the envelope signal component of the input data signal is sensed and filtered in a lowpass and taken as the supply voltage for two nonlinear amplifiers, i.e. the EER principle is applied only for the lowpass part of the envelope signal component. The phase signal component is split in two phase modulated signal components of constant amplitude each comprising as a phase component a phase angle based on a weighted ratio of the envelope signal component and the filtered envelope signal component. Subsequently each phase modulated signal component of constant amplitude is amplified by one of said two nonlinear amplifiers. The constant envelope signals allow for designing both nonlinear power amplifiers optimally for high efficiency. After amplification both signals are recombined by means of a suited combiner, as e.g. a Chireix or Wilkinson combiner, in order to produce an amplified replica of the original amplitude and phase modulated input data signal.

The main idea of the invention is the realization of a superior radio-over-fiber architecture by dividing a CLIER amplifier into two remote parts connected by at least one optical connection. As digital signals are more fault-tolerant against interferences than analogue signals, preferably digital optical signals are transmitted over the at least one optical connection.

According to the invention, a data signal is represented by an envelope signal component and a phase signal component in a first part of an amplifier located in a transmitting device, the envelope signal component is filtered in a lowpass filter resulting in a filtered envelope signal component in the first part of the amplifier, the phase signal component is split in two phase modulated signal components of constant amplitude each comprising as a phase component a phase angle based on a weighted ratio of the envelope signal component and the filtered envelope signal component in the first part of the amplifier, at least one of the group of the two phase modulated signal components of constant amplitude and the filtered envelope signal component is converted from an electrical signal into an optical signal in at least one electro-optical converter located in the transmitting device, the at least one of the group of the two phase modulated signal components of constant amplitude and the filtered envelope signal component is transmitted over at least one optical connection from the transmitting device to the at least one receiving device, the at least one of the group of the two phase modulated signal components of constant amplitude and the filtered envelope signal component is converted from an optical signal into an electrical signal in at least one opto-electrical converter located in said at least one receiving device, the filtered envelope signal component is amplified in a second part of the amplifier that is located in said at least one receiving device resulting in an amplified filtered envelope signal component, and the two phase modulated signal components of constant amplitude are amplified using the amplified filtered envelope signal component as supply voltage and are combined in a second part of the amplifier that is located in said at least one receiving device.

For transmission of signals from a base station via at least one remote antenna head to a user terminal, a CLIER amplifier for signal amplification is used, and the signals are transmitted over said at least one optical connection from the base station to the at least one remote antenna head.

This concept enables new architectures which easily reduce costs and hardware effort, and moreover it allows for easy scaling e.g. in beamforming and MIMO applications.

In order to enable transmission of digital optical signals over the at least one optical connection, at least one of the group of the two phase modulated signal components of constant amplitude and the filtered envelope signal component needs to be converted to digital electrical domain before passing them to the at least one electro-optical converter. Concerning the two phase modulated signal components of constant amplitude, this is facilitated by the constant amplitude of said signal components.

Further developments of the invention can be gathered from the dependent claims and the following description.

In the following the invention will be explained further making reference to the attached drawings.

Fig. 1 schematically shows a cellular communication network with a base station and remote antenna heads in which embodiments of the invention can be implemented.

Fig. 2 schematically shows a CLIER amplifier architecture according to the state-of-the-art.

Fig. 3 schematically shows a transmitter and a receiver with a distributed CLIER amplifier according to an embodiment of the invention.

Fig. 4 schematically shows a transmitter and a receiver with a distributed CLIER amplifier applying the principles of optical multiplexing and demultiplexing according to an embodiment of the invention.

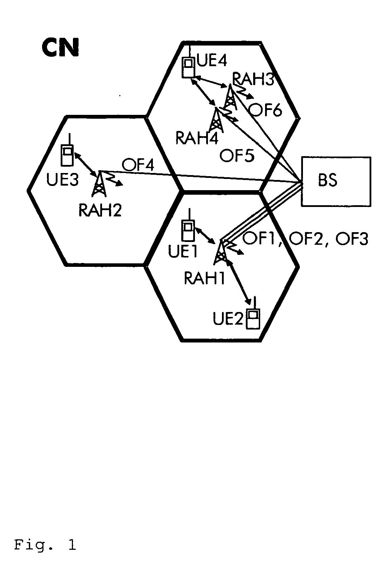

The principle structure of a communication network CN for signal transmission and reception in which the invention can be implemented is shown in fig. 1. The communication network CN comprises a base station BS, remote antenna heads RAH1-RAH4 and user terminals UE1-UE4.

Each of said remote antenna heads RAH1-RAH4 is connected to the base station BS by means of an optical connection, as e.g. an optical fiber or an optical free-space connection, OF1, OF2, OF3, OF4, OF5 and OF6 respectively. Each of said user terminals UE1-UE4 is connected to one or multiple of said remote antenna heads RAH1-RAH4, which is symbolized by double arrows in fig. 1. The base station BS is in turn connected to a core network, which is not shown in fig. 1 for the sake of simplicity.

For amplification of signals that shall be transmitted from the base station BS via a remote antenna head RAH1-RAH4 to a user terminal UE1-UE4, CLIER amplifiers according to the state-of-the-art that are located in the remote antenna heads RAH1-RAH4 can be used.

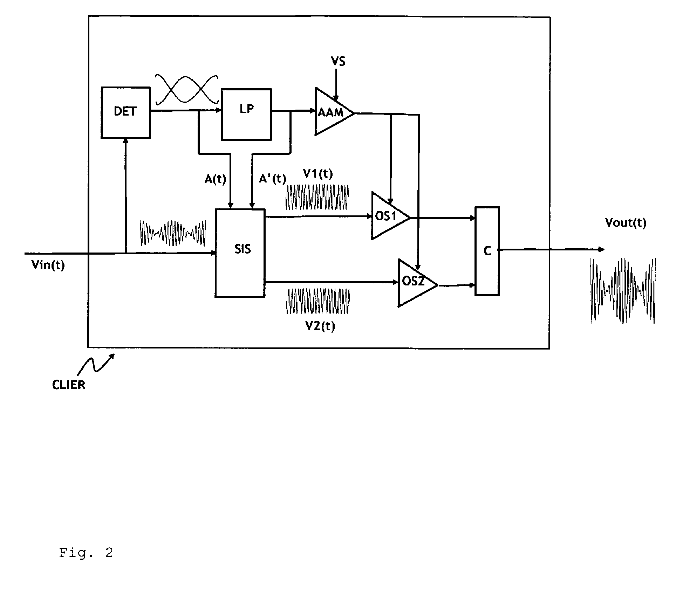

Fig. 2 schematically shows a CLIER amplifier according to the state-of-the-art.

An input of the CLIER amplifier, e.g. for input of baseband, intermediate frequency or radio frequency (RF) signals $V_{in}(t)$, is connected both to an input of an amplitude detector DET and to a first input of a signal separator SIS.

A first output of the signal separator SIS is connected to an input of a first output stage OS1. A second output of the signal separator SIS is connected to an input of a second output stage OS2.

An output of the amplitude detector DET is connected both to an input of a lowpass filter LP and to a second input of the signal separator SIS.

An output of the lowpass filter LP is connected both to a third input of the signal separator SIS, and to a first input of an amplitude amplifier AAM. A second input of the amplitude amplifier AAM is provided to connect a supply voltage VS.

An output of the amplitude amplifier AAM is connected to second inputs, the supply voltage inputs, of both the first output stage OS1 and the second output stage OS2.

An output of the first output stage OS1 is connected to a first input of a combiner C, and an output of the second output stage OS2 is connected to a second input of the combiner C.

An output of the combiner C is provided to output an amplified signal Vout(t).

In a method for signal amplification using a CLIER amplifier according to the state-of-the-art as shown in fig. 2, an analogue input data signal Vin(t) is sent to the input of the CLIER amplifier and thus to the input of the signal separator SIS.

The envelope signal component of the data signal is sensed by the amplitude detector DET sensing the signal before the signal separator SIS. By the amplitude detector DET, the varying phase signal is eliminated resulting in an envelope signal component of slowly varying amplitude $A(t)$.

In the lowpass filter LP, the envelope signal component $A(t)$ is filtered resulting in a filtered envelope signal component $A'(t)$ .

Both the envelope signal component $A(t)$ and the filtered envelope signal component $A'(t)$ are transmitted from the amplitude detector DET and the lowpass filter LP respectively to the signal separator SIS.

In the signal separator SIS, the input signal Vin(t) is split into two phase modulated signal components of constant amplitude using both the envelope signal component $A(t)$ and the filtered envelope signal component $A'(t)$. In other words, the amplitude modulation of the input signal Vin(t) is converted into phase modulations of two signals V1 (t) and V2(t) with constant envelope as in the following:

$$Vin(t) = A(t)\cos(\omega t + \theta(t)) = V1(t) + V2(t)$$

$$V1(t) = \frac{A}{2}(\sin(\omega t + \theta(t) + \phi(t)))$$

$$V2(t) = \frac{A}{2}(\sin(\omega t + \theta(t) - \phi(t)))$$

$$\phi(t) = \sin^{-1}\left(k\frac{A(t)}{A'(t)}\right)$$

In the formulas above, $\omega$ is the frequency, $\theta(t)$ is the instantaneous phase variation, and $A$ is the maximum value of $A(t)$. Furthermore, $k$ is a positive constant parameter which is chosen in such a way, that $\frac{A(t)}{A'(t)} < 1$ with a predefined probability.

The filtered envelope signal component $A'(t)$ is sent to the first input of the amplitude amplifier AAM. The supply voltage VS, which is connected to the second input of the amplitude amplifier AAM, is modulated with the filtered envelope signal component $A'(t)$ resulting in an amplified filtered envelope signal component.

The amplified filtered envelope signal component is connected as supply voltage to the second input, i.e. the supply voltage input, of both the first output stage OS1 and the second output stage OS2.

The first phase modulated signal component of constant amplitude V1(t) is applied at the input of the first output stage OS1 and amplified in said first output stage OS1. At the output of the first output stage OS1, an amplified copy of the first phase modulated signal component of constant amplitude V1(t) is provided for input at the first input of the combiner C.

The second phase modulated signal component of constant amplitude V2(t) is applied at the input of the second output stage OS2 and amplified in said second output stage OS2. At the output of the second output stage OS2, an amplified copy of the second phase modulated signal component of constant amplitude V2(t) is provided for input at the second input of the combiner C.

In the combiner C, the amplified copy of the first phase modulated signal component of constant amplitude V1(t) is combined with the amplified copy of the second phase modulated signal component of constant amplitude V2(t) resulting in an amplified copy of the input signal Vin(t). Said amplified copy of the input signal Vin(t) is provided at the output of the combiner C as output signal Vout(t) of the CLIER amplifier.

As the EER method is only applied to the lowpass filtered part of the envelope signal component, usage of efficient, but bandwidth restricted class S amplifiers is enabled. Furthermore, as the two phase modulated signal components of constant amplitude comprise as a phase component a phase angle based on the weighted ratio of the envelope signal component and the filtered envelope signal component, the difference power losses which occur in the combiner C are reduced.

In the following, the application of CLIER amplifiers in two embodiments of the invention is depicted. The basic idea of both embodiments is to generate two phase modulated signal components of constant amplitude and a filtered envelope signal component in a first part of a CLIER amplifier located in a transmitting device, to transmit at least one of the group of the two phase modulated signal components of constant amplitude and the filtered envelope signal component via an optical connection to a second part of the CLIER amplifier located in a receiving device, and to amplify and combine the phase modulated signal components of constant amplitude in the second part of the CLIER amplifier using the amplified filtered envelope signal component as supply voltage for amplification of the phase modulated signal components of constant amplitude.

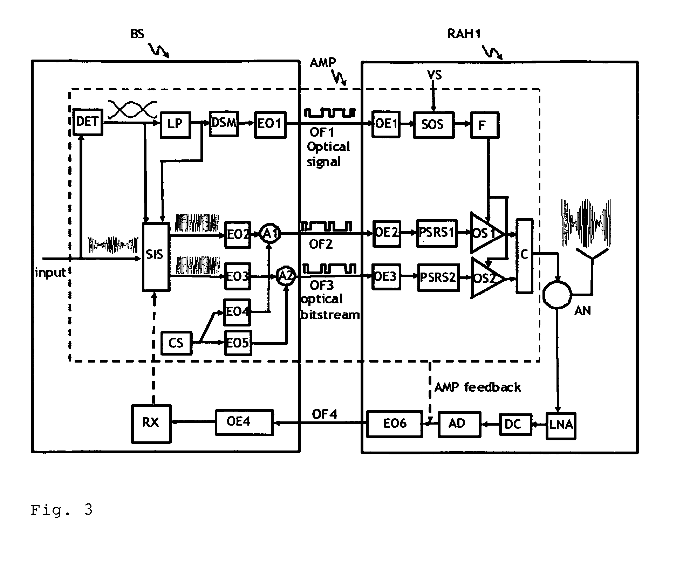

An embodiment of a CLIER amplifier AMP according to the invention is depicted in fig. 3. The CLIER amplifier AMP is indicated as a dashed box and comprises a signal separator SIS, an amplitude detector DET, a lowpass filter LP, a delta sigma modulator DSM, a carrier synthesizer CS, five electro-optical converters EO1-EO5, two optical adders A1 and A2, three opto-electrical converters OE1-OE3, two phase signal re-synthesizers PSRS1 and PSRS2, two output stages OS1 and OS2, a switched output stage SOS, a filter F, and a combiner C.

In the embodiment depicted in fig. 3, the signal separator SIS, the amplitude detector DET, the lowpass filter LP, the delta sigma modulator DSM, the carrier synthesizer CS, the five electro-optical converters EO1-EO5, and the two optical adders A1 and A2 are comprised in a base station BS, which is indicated as a box, and the three opto-electrical converters OE1-OE3, the two phase signal re-synthesizers PSRS1 and PSRS2, the two output stages OS1 and OS2, the switched output stage SOS, the filter F, and the combiner C are comprised in a remote antenna head RAH1, which is also indicated as a box.

The base station BS further comprises a fourth opto-electrical converter OE4 and a receiver RX.

The remote antenna head RAH1 further comprises an antenna network AN, a low noise amplifier LNA, a down converter DC, an analogue to digital converter AD, and a sixth electro-optical converter E06.

An input for e.g. baseband, intermediate frequency or radio frequency signals is connected both to an input of the amplitude detector DET and to a first input of the signal separator SIS.

An output of the amplitude detector DET is connected both to an input of a lowpass filter LP and to a second input of the signal separator SIS.

An output of the lowpass filter LP is connected both to a third input of the signal separator SIS, and to a first input of the delta sigma modulator DSM. An output of the delta sigma modulator DSM is connected to an input of the first electro-optical converter EO1, and an output of the first electro-optical converter EO1 is connected to an input of the first opto-electrical converter OE1 through an optical connection OF1, as e.g. an optical fiber or an optical free-space connection.

A first output of the signal separator SIS is connected to an input of the second electro-optical converter E02. A second output of the signal separator SIS is connected to an input of a third electro-optical converter EO3.

An output of the second electro-optical converter E02 is connected to a first input of the first optical adder A1 through an optical connection, and an output of the first optical adder A1 is connected to an input of the second opto-electrical converter OE2 through an optical connection OF2, as e.g. an optical fiber or an optical free-space connection.

An output of the third electro-optical converter EO3 is connected to a first input of the second optical adder A2 through an optical connection, and an output of the second optical adder A2 is connected to an input of the third opto-electrical converter OE3 through an optical connection OF3, as e.g. an optical fiber or an optical free-space connection.

An output of the first opto-electrical converter OE1 is connected to an input of the switched output stage SOS, and an output of the switched output stage SOS is connected to an input of the filter F.

An output of the second opto-electrical converter OE2 is connected to an input of the first phase signal re-synthesizer PSRS1, and an output of the first phase signal re-synthesizer PSRS1 is connected to a first input of the first output stage OS1.

An output of the first output stage OS1 is connected to a first input of the combiner C.

An output of the third opto-electrical converter OE3 is connected to an input of the second phase signal re-synthesizer PSRS2, and an output of the second phase signal re-synthesizer PSRS2 is connected to a first input of the second output stage OS2.

An output of the second output stage OS2 is connected to a second input of the combiner C.

An output of the filter F is connected both to a second input of the first output stage OS1, and to a second input of the second output stage OS2.

An output of the carrier synthesizer CS is connected both to an input of the fourth electro-optical converter E04 and to an input of the fifth electro-optical converter EO5.

An output of the fourth electro-optical converter E04 is connected to a second input of the first optical adder A1 through an optical connection, and an output of the fifth electro-optical converter EO5 is connected to a second input of the second optical adder A2 through an optical connection.

In an embodiment of the invention, the output of the carrier synthesizer CS is connected to an input of only one electro-optical converter, and the output of the electro-optical converter is connected both to the second input of the first optical adder A1 through an optical connection, and to the second input of the second optical adder A2 through an optical connection.

An output of the combiner C is connected to the antenna network AN.

In an embodiment of the invention, a further device for signal conditioning, as e.g. a filter, an equalizer or a preamplifier, is comprised in the signal paths between the electro-optical converters EO1-EO5 and the opto-electrical converters OE1, OE2 and OE3 respectively, or in the signal paths between the opto-electrical converters OE1, OE2 and OE3 and the output stages SOS, OS1 and OS2 respectively.

In a reception path, an output of the antenna network AN is connected to an input of the low noise amplifier LNA, and an output of the low noise amplifier LNA is connected to an input of the down converter DC.

An output of the down converter DC is connected to an input of the analogue-to-digital converter AD, and an output of the analogue-to-digital converter AD is connected to an input of the sixth electro-optical converter E06.

An output of the sixth electro-optical converter E06 is connected to an input of the fourth opto-electrical converter OE4 through an optical connection OF4 as e.g. an optical fiber or an optical free-space connection.

The output of the fourth opto-electrical converter OE4 is in turn connected to an input of the receiver RX.

In an embodiment of the invention, an output of the CLIER amplifier AMP is connected to the reception path, preferably at an input of the sixth electro-optical converter E06, which is indicated by a dotted arrow in fig. 3, e.g. for linearization and optimization purposes.

Preferably, said electro-optical converters EO1-EO6 each comprise a laser diode which is either directly modulated or externally modulated e.g. by means of an electroabsorption or lithiumniobate modulator.

Preferably, said opto-electrical converters OE1-OE4 each comprise a so-called PIN-diode or a so-called avalanche-photodiode.

In the embodiment depicted in fig. 3, an analogue data signal on an intermediate frequency $f_{if}$ preferably in the frequency range 10-100 MHz is sent to the input of the CLIER amplifier AMP and thus to the input of the signal separator SIS.

The envelope signal component of the data signal is sensed by the amplitude detector DET, which is sensing the signal before the signal separator SIS. By the amplitude detector DET, the varying phase signal is eliminated resulting in an envelope signal component of slowly varying amplitude $A(t)$.

In the lowpass filter LP, the envelope signal component $A(t)$ is filtered resulting in a filtered envelope signal component $A'(t)$ .

Both the envelope signal component $A(t)$ and the filtered envelope signal component $A'(t)$ are transmitted from the amplitude detector DET and the lowpass filter LP respectively to the signal separator SIS.

The filtered envelope signal component of slowly varying amplitude is sent to the first input of the delta sigma modulator DSM, and is converted into a digital signal in the delta sigma modulator DSM. The delta sigma modulation used for digitizing the envelope signal component can be performed by means of a conventional, relatively slow low-pass delta sigma modulator, thus saving energy and chip complexity. In another embodiment, the filtered envelope signal component of slowly varying amplitude is modulated using Pulse Width Modulation(PWM) instead of a delta sigma modulator DSM.

The digital filtered envelope signal component is sent to the first electro-optical converter EO1 for converting digital electrical signals into digital optical signals.

From the output of the first electro-optical converter EO1, the digital optical filtered envelope signal component is sent over the optical connection OF1 to the input of the first opto-electrical converter OE1.

In the first opto-electrical converter OE1, digital optical signals are back-converted into digital electrical signals.

The resulting digital electrical filtered envelope signal component is sent from the output of the first opto-electrical converter OE1 to the first input of the switched output stage SOS.

In the switched output stage SOS, the digital electrical signals drive at least one transistor via at least one driver, which leads to amplified digital electrical signals at the output of the switched output stage SOS. Thus, the supply voltage VS, which is connected to the second input of the switched output stage SOS, is modulated with the digital electrical filtered envelope signal component resulting in an amplified digital electrical filtered envelope signal component. The switched output stage can also e.g. be realized as a so-called class D amplifier.

Thus, the delta sigma modulator DSM in combination with the switched output stage SOS build a switched mode amplifier for amplification of the filtered envelope signal components.

Said amplified digital electrical filtered envelope signal component is sent to the input of the filter F, and by means of said filter F, the amplified analogue filtered envelope signal component is reconstructed and is connected as supply voltage to the second inputs of the output stage OS1 and OS2 respectively via the output of the filter F.

In the signal separator SIS, the analogue data signal is split into two phase modulated signal components of constant amplitude using both the envelope signal component $A(t)$ and the filtered envelope signal component $A'(t)$ as described above under fig. 2.

The two phase modulated signal components of constant amplitude are converted from analogue to digital signals in the signal separator SIS.

In another embodiment of the invention, the conversion from analogue to digital signals is not performed in the signal separator SIS, but in an analogue-to-digital converter which is located in the signal path between the signal separator SIS and the electro-optical converter E02 and EO3 respectively.

In yet another embodiment of the invention, the analogue data signal is converted from an analogue signal to a digital signal before the envelope signal component is sensed, and before the data signal is split into two phase modulated signal components of constant amplitude in the signal separator SIS.

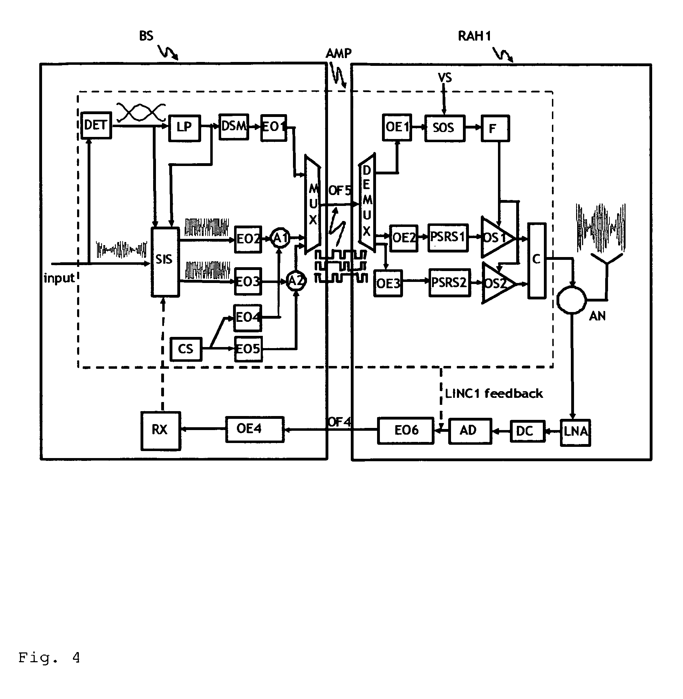

In yet another embodiment of the invention, the data signal is already provided as a digital data signal at the input of the CLIER amplifier AMP depicted in fig. 3 or in fig. 4, and thus no conversion from an analogue signal to a digital signal is necessary.

The first phase modulated signal component of constant amplitude  is sent to the second electro-optical converter E02 for converting digital electrical signals into digital optical signals using an optical source with $f_{optical}$ being the frequency of the light of the optical source, so that the first digital optical phase modulated signal component has a frequency $f_{os} = f_{optical} \pm f_{if}$.

From the output of the second electro-optical converter E02, the first digital optical phase modulated signal component is sent over the optical connection to the first input of the first optical adder A1.

The second phase modulated signal component of constant amplitude is sent to the third electro-optical converter EO3 for converting digital electrical signals into digital optical signals using an optical source with $f_{optical}$ being the frequency of the light of the optical source, so that the second digital optical phase modulated signal component has a frequency $f_{os} = f_{optical} \pm f_{if}$.

From the output of the third electro-optical converter EO3, the second digital optical phase modulated signal component is sent over the optical connection to the first input of the second optical adder A2.

In the carrier synthesizer CS, a radio frequency carrier signal on a radio frequency $f_{rf}$ preferably in the frequency range of several hundreds of MHz to several GHz is generated. The radio frequency carrier signal is sent to the fourth and fifth electro-optical converter E04 and EO5 for converting the electrical radio frequency carrier signal into an optical radio frequency carrier signal using an optical source with $f_{optical}$ being the frequency of the light of the optical source, so that the optical radio frequency carrier signal has a frequency $f_{orf} = f_{optical} \pm f_{fr}$.

From the output of the fourth and fifth electro-optical converter  E04 and EO5, the optical radio frequency carrier signal is sent over optical connections to the second input of the first optical adder A1 and the second optical adder A2 respectively.

In the first optical adder A1, the first digital optical phase modulated signal component is added with the optical radio frequency carrier signal, i.e. the first digital optical phase modulated signal component with the frequency $f_{os} = f_{optical} \pm f_{if}$ is summed up with the optical radio frequency carrier signal with the frequency $f_{orf} = f_{optical} \pm f_{rf}$, which results in first combined optical data signals.

From the output of the first optical adder A1, the first combined optical data signals are sent over the optical connection OF2 to the input of the second opto-electrical converter OE2.

In the second opto-electrical converter OE2, the principle of optical heterodyning is applied, and the first digital optical phase modulated signal component is upconverted into a first digital electrical phase modulated signal component. The intensity of the detected first digital electrical phase modulated signal component varies with a frequency $f_{des} = f_{rf} \pm f_{if}$, as all higher frequency components of the intensity in the range of $f_{optical}$ are time averaged in the second opto-electrical converter OE2. The first digital electrical phase modulated signal component is sent from the output of the second opto-electrical converter OE2 to an input of the first phase signal re-synthesizer PSRS1 in which the analogue first phase modulated signal component of constant amplitude is recovered.

The first phase modulated signal component of constant amplitude is sent from the output of the first phase signal re-synthesizer PSRS1 to the input of the first output stage OS1, which leads to an amplified copy of the first phase modulated signal component of constant amplitude at the output of the first output stage OS1.

In an embodiment of the invention, the analogue first phase modulated signal component of constant amplitude is recovered by means of implicit passive signal reconstruction filtering in the first output stage OS1, and no first phase signal re-synthesizer PSRS1 is needed.

The amplified copy of the first phase modulated signal component of constant amplitude is sent to the first input of the combiner C.

In the second optical adder A2, the second digital optical phase modulated signal component is added with the optical radio frequency carrier signal, i.e. the second digital optical phase modulated signal component with the frequency $f_{os} = f_{optical} \pm f_{if}$ is summed up with the optical radio frequency carrier signal with the frequency $f_{orf} = f_{optical} \pm f_{rf}$, which results in second combined optical data signals.

From the output of the second optical adder A2, the second combined optical data signals are sent over the optical connection OF3 to the input of the third opto-electrical converter OE3.

In the third opto-electrical converter OE3, the principle of optical heterodyning is applied, and the second digital optical phase modulated signal component is upconverted into a second digital electrical phase modulated signal component. The intensity of the detected second digital electrical phase modulated signal component varies with a frequency $f_{des} = f_{rf} : \pm f_{if}$, as all higher frequency components of the intensity in the range of $f_{optical}$ are time averaged in the third opto-electrical converter OE3. The second digital electrical phase modulated signal component is sent from the output of the third opto-electrical converter OE3 to an input of the second phase signal re-synthesizer PSRS2 in which the analogue second phase modulated signal component of constant amplitude is recovered.

The second phase modulated signal component of constant amplitude is sent from the output of the second phase signal re-synthesizer PSRS2 to the input of the second output stage OS2, which leads to an amplified copy of the second phase modulated signal component of constant amplitude at the output of the second output stage OS2.

In an embodiment of the invention, the analogue second phase modulated signal component of constant amplitude is recovered by means of implicit passive signal reconstruction filtering in the second output stage OS2, and no second phase signal re-synthesizer PSRS2 is needed.

The amplified copy of the second phase modulated signal component of constant amplitude is sent to the second input of the combiner C.

In the combiner C, the amplified copy of the first phase modulated signal component of constant amplitude is combined with the amplified copy of the second phase modulated signal component of constant amplitude resulting in an upconverted and amplified copy of the analogue data signal provided at the input of the CLIER amplifier AMP. Said amplified copy of the analogue data signal is provided at the output of the combiner C as output signal of the CLIER amplifier AMP.

The upconverted and amplified copy of the analogue data signal is sent to the antenna network AN for transmission over an air interface.

In the reception path, analogue electrical signals are sent from the antenna network AN to the low noise amplifier LNA for signal amplification.

The amplified analogue electrical signals are sent to the down converter DC in which the signals are downconverted from the radio frequency to the intermediate frequency.

The downconverted analogue electrical signals are sent to the analogue-to-digital converter AD for digitalization, and the digital electrical signals are sent to the sixth electro-optical converter E06 for converting the digital electrical signals into digital optical signals.

The digital optical signals are sent from the sixth electro-optical converter E06 to the fourth opto-electrical converter OE4 through the optical connection OF4.

In the fourth opto-electrical converter OE4, the digital optical signals are back-converted into digital electrical signals and sent to the receiver RX for further processing.

In an embodiment of the invention, if linearization or additional, output signal dependant control, of the CLIER amplifier AMP should become necessary, an output signal of the CLIER amplifier AMP is fed back via the sixth electro-optical converter E06 and the optical connection OF4 to the base station BS, and based on said fed back output signal, the CLIER amplifier AMP is controlled, which is indicated by a dotted arrow between the receiver RX and the signal separator SIS.

Advantages of the above described embodiment of the invention are, that by using optical heterodyning, the need for electrical upconversion is dropped, and the signal processing related to the phase modulated signal components of constant amplitude is performed on an intermediate frequency level at considerably reduced speed and hence reduced power dissipation and chip complexity. Furthermore, the central generation of optical radio frequency carrier signals in a base station can be used to supply several remote antenna heads, as e.g. the remote antenna heads RAH1-RAH3 in fig. 1, for optical heterodyning.

However, the application of optical heterodyning is not mandatory for the invention. Thus, in an embodiment of the invention, the phase modulated signal components of constant amplitude are electrically upconverted before they are sent to the second and third electro-optical converters E02 and EO3 respectively, and the digital optical phase modulated signal components are sent directly over an optical connection to the second and third opto-electrical converters OE2 and OE3 respectively. As a consequence, the carrier synthesizer CS, the fourth and fifth electro-optical converters EO4 and EO5, and the optical adders A1 and A2 are not necessary in this embodiment.

In principle, it is not necessary for the application of the invention that both phase modulated signal components of constant amplitude are transmitted as an optical signal from the base station BS to the remote antenna head RAH1, i.e. it is possible that either the first phase modulated signal component of constant amplitude or the second phase modulated signal component of constant amplitude is transmitted electrically from the base station BS to the remote antenna head RAH1. Thus, in embodiments of the invention, either only the first phase modulated signal component of constant amplitude or only the second phase modulated signal component of constant amplitude is transmitted optically from the base station BS to the remote antenna head RAH1.

In an embodiment of the invention, the analogue data signal which is sent to the input of the CLIER amplifier AMP is not on an intermediate frequency, but on a baseband frequency.

In an embodiment of the invention, the usage of a common carrier synthesizer CS and a common reception path for more than one CLIER amplifier AMP as depicted in fig. 3 reduces the costs and makes the system scalable for the usage of several antennas applying so-called beamforming or multiple-input-multiple-output.

In the embodiment depicted in fig. 4, a distributed CLIER amplifier AMP applying the principles of optical multiplexing and demultiplexing according to the invention is shown. The basic structure of the distributed CLIER amplifier AMP is similar to the structure of the distributed CLIER amplifier depicted in fig. 3 and described above. Thus, in the following only the differences compared to the distributed CLIER amplifier depicted in fig. 3 are described.

The distributed CLIER amplifier AMP depicted in fig. 4 comprises an optical multiplexer MUX which is located in the base station BS and an optical demultiplexer DEMUX which is located in the remote antenna head RAH1.

The output of the first electro-optical converter EO1 is connected to a first input of the optical multiplexer MUX through an optical connection.

The output of the first optical adder A1 is connected to a second input of the optical multiplexer MUX through an optical connection.

The output of the second optical adder A2 is connected to a third input of the optical multiplexer MUX through an optical connection, and an output of the optical multiplexer MUX is connected to an input of the optical demultiplexer DEMUX through an optical connection OF5.

A first output of the optical demultiplexer DEMUX is connected through an optical connection to the input of the first opto-electrical converter OE1, a second output of the optical demultiplexer DEMUX is connected through an optical connection to the input of the second opto-electrical converter OE2, and a third output of the optical demultiplexer DEMUX is connected through an optical connection to the input of the third opto-electrical converter OE3.

In the embodiment depicted in fig. 3, the optical filtered envelope signal component and the first and second optical phase modulated signal components of constant amplitude are transmitted over separate optical connections OF1, OF2 and OF3 from the base station BS to the remote antenna head RAH1.

In the embodiment depicted in fig. 4, the optical filtered envelope signal component, the first and second optical phase modulated signal components of constant amplitude, and the optical radio frequency carrier signals are multiplexed in the optical multiplexer MUX, and transmitted over the common optical connection OF5 to the optical demultiplexer DEMUX, in which the optical signals are demultiplexed. As optical multiplexing and demultiplexing is applied in this embodiment, the optical frequency that is used for upconversion in the electro-optical converters E02 and E04 is different from the optical frequency that is used for upconversion in the electro-optical converters EO3 and EO5, and said both optical frequencies are again different from the optical frequency that is used for transmission in the electro-optical converter EO1. The optical filtered envelope signal component is sent to the first opto-electrical converter OE2, the first optical phase modulated signal component and the respective optical radio frequency carrier signal are sent to the second opto-electrical converter OE2, and the second optical phase modulated signal component and the respective optical radio frequency carrier signal are sent to the third opto-electrical converter OE3.

In the embodiments described above, analogue data signals are provided at the input of the CLIER amplifier AMP. However, in further preferred embodiments, the input data signal provided at the input of the CLIER amplifier AMP is a digital signal, as e.g. a so-called I or Q value provided from a digital processing unit on a baseband frequency. In the signal separator SIS, the digital data signal is split into two digital phase modulated signal components of constant amplitude. In embodiments using digital input data signals, no conversion from analogue to digital signals in the signal separator SIS as described in the embodiments using analogue input data signals is necessary, but instead a dedicated signal processing must be performed.

In embodiments using digital input data signals, the signal separator SIS is preferably implemented in a field programmable gate array (FPGA), but could also be implemented in an application-specific integrated circuit (ASIC).

Such a CLIER amplifier according to the invention can be used e.g. for a communication network applying the standard Universal Mobile Telecommunications System, Third Generation Partnership Project Long Term Evolution, or Worldwide Interoperability for Microwave Access.

In the embodiments above, the invention is described for the transmission of signals from a base station BS via at least one remote antenna head RAH1 to a user terminal UE1, however the invention is also applicable for transmission of signals from an arbitrary transmitting device to an arbitrary receiving device, as e.g. used in a point-to-point radio system or used for connection of devices within a rack.

**Claims**

1. A method for transmission of a data signal from a transmitting device (BS) to at least one receiving device (RAH1) using an amplifier (AMP) for signal amplification, wherein

   ● the data signal is represented by an envelope signal component and a phase signal component in a first part of the amplifier (AMP) located in the transmitting device (BS),
   ● the envelope signal component is filtered in a lowpass filter resulting in a filtered envelope signal component in the first part of the amplifier (AMP),
   ● the phase signal component is split in two phase modulated signal components of constant amplitude (SIS) each comprising as a phase component a phase angle based on a weighted ratio of the envelope signal component and the filtered envelope signal component in the first part of the amplifier (AMP),
   ● at least one of the group of the two phase modulated signal components of constant amplitude and the filtered envelope signal component is converted from an electrical signal into an optical signal in at least one electro-optical converter (EO1, E02, E03) located in the transmitting device (BS),
   ● the at least one of the group of the two phase modulated signal components of constant amplitude and the filtered envelope signal component is transmitted over at least one optical connection (OF1, OF2, OF3) from the transmitting device (BS) to the at least one receiving device (RAH1),
   ● the at least one of the group of the two phase modulated signal components of constant amplitude and the filtered envelope signal component is converted from an optical signal into an electrical signal in at least one opto-electrical converter (OE1, OE2, OE3) located in said at least one receiving device (RAH1),
   ● the filtered envelope signal component is amplified in a second part of the amplifier (AMP) that is located in said at least one receiving device (RAH1) resulting in an amplified filtered envelope signal component,
   ● and the two phase modulated signal components of constant amplitude are amplified using the amplified filtered envelope signal component as supply voltage and are combined in the second part of the amplifier (AMP) that is located in said at least one receiving device (RAH1).

2. A method according to claim 1, **characterized in, that**

   ● said at least one of the group of the two phase modulated signal components of constant amplitude and the filtered envelope signal component is converted from an analogue electrical signal to a digital electrical signal in the transmitting device (BS),
   ● said at least one of the group of the two phase modulated signal components of constant amplitude and the filtered envelope signal component is transmitted as a digital optical signal over the at least one optical connection (OF1, OF2, OF3),
   ● and said at least one of the group of the two phase modulated signal components of constant amplitude and the filtered envelope signal component is converted from a digital electrical signal to an analogue electrical signal in the receiving device (RAH1).

3. A method according to claim 1 or 2, **characterized in, that**

   ● a radio frequency carrier signal is converted from an electrical signal into an optical radio frequency carrier signal in a further electro-optical converter (EO4, EO5) in the transmitting device (BS),
   ● at least one of the two phase modulated signal components of constant amplitude is added with the optical radio frequency carrier signal resulting in a combined optical signal,
   ● the combined optical signal is converted from an optical signal into an electrical signal in an opto-electrical converter (OE2, OE3) in said at least one receiving device (RAH1),

● and said at least one of the two phase modulated signal components of constant amplitude is upconverted to radio frequency domain by multiplication with the optical radio frequency carrier signal applying optical heterodyning in the opto-electrical converter (OE2, OE3) .

4. A method according to claim 1, **characterized in, that**

● an output signal of the amplifier (AMP) is fed back to the transmitting device (BS),
● and based on said fed back output signal, the amplifier (AMP) is controlled or linearized.

5. A method according to claim 1, **characterized in, that** said transmitting device (BS) is a base station and said at least one receiving device (RAH1) is a remote antenna head, and said data signal is transmitted from the base station (BS) via the at least one remote antenna head (RAH1) to a user terminal (UE1).

6. A method according to claim 5, **characterized in, that** the data signal from the base station (BS) is transmitted via at least two remote antenna heads (RAH3, RAH4) to a user terminal (UE4) applying beamforming or multiple-input-multiple-output.

7. A method according to claim 1 or claim 2, **characterized in, that**

● at least two of the group of the two phase modulated signal components of constant amplitude and the filtered envelope signal component are converted from electrical signals into optical signals in electro-optical converters (EO1, EO2, EO3) in the transmitting device (BS),
● said at least two of the group of the two phase modulated signal components of constant amplitude and the filtered envelope signal component are optically multiplexed in an optical multiplexer (MUX) located in the transmitting device (BS),
● the at least two of the group of the two phase modulated signal components of constant amplitude and the filtered envelope signal component are transmitted over one optical connection (OF5) from the transmitting device (BS) to an optical demultiplexer (DEMUX) located in the at least one receiving device (RAH1),
● and the at least two of the group of the two phase modulated signal components of constant amplitude and the filtered envelope signal component are optically demultiplexed in the optical demultiplexer (DEMUX).

8. An amplifier (AMP) **wherein**

● a first part of the amplifier (AMP) comprises a first signal path for a first phase modulated signal component of constant amplitude, a second signal path for a second phase modulated signal component of constant amplitude, a third signal path for a filtered envelope signal component, and at least one electro-optical converter (EO1, E02, E03) for converting at least one of the group of the two phase modulated signal components of constant amplitude and the filtered envelope signal component from electrical signals into optical signals,
● a second part of the amplifier (AMP) comprises at least one opto-electrical converter (OE1, OE2, OE3) for converting at least one of the two phase modulated signal components of constant amplitude and the filtered envelope signal component from optical signals into electrical signals, a first output stage (OS1) for amplification of the first phase modulated signal component, a second output stage (OS2) for amplification of the second phase modulated signal component, a third output stage (SOS) for amplification of the filtered envelope signal component which results in an amplified filtered envelope signal component which is used as supply voltage for the first output stage (OS1) and the second output stage (OS2), and a combiner (C) for combining the two amplified phase modulated signal components of constant amplitude,
● and said first and second part of the amplifier (AMP) are connected by at least one optical connection (OF1, OF2, OF3).

9. An amplifier (AMP) according to claim 8, **characterized in, that** said combiner (C) is a Chireix or Wilkinson combiner.

10. A receiving device (RAH1) for reception of signals sent from a transmitting device (BS) **wherein** said receiving device (RAH1) comprises as a second part of an amplifier (AMP)

● at least one opto-electrical converter (OE1, OE2, OE3) for converting at least one of a group of two phase modulated signal components of constant amplitude and a filtered envelope signal component from optical signals into electrical signals,
● a first output stage (OS1) for amplification of the first phase modulated signal component,

● a second output stage (OS2) for amplification of the second phase modulated signal component,

● a third output stage (SOS) for amplification of the filtered envelope signal component which results in an amplified filtered envelope signal component which is used as supply voltage for the first output stage (OS1) and the second output stage (OS2),

● and a combiner (C) for combining the two amplified phase modulated signal components of constant amplitude.

**11.** A receiving device (RAH1) according to claim 10, **characterized in, that** said receiving device (RAH1) is a remote antenna head (RAH1) for reception of signals sent from a base station (BS).

**12.** A communication network (CN) comprising at least one receiving device (RAH1) according to claim 11.


**Patentansprüche**

**1.** Verfahren zur Übertragung eines Datensignals von einer Übertragungsvorrichtung (BS) an mindestens eine Empfangsvorrichtung (RAH1) unter Verwendung eines Verstärkers (AMP) zur Signalverstärkung,
wobei

• das Datensignal durch eine Hüllkurvensignalkomponente und eine Phasensignalkomponente in einem in der Übertragungsvorrichtung (BS) angeordneten ersten Teil des Verstärkers (AMP) dargestellt wird,
• die Hüllkurvensignalkomponente in einem Tiefpassfilter gefiltert wird, wodurch eine gefilterte Hüllkurvensignalkomponente im ersten Teil des Verstärkers (AMP) erhalten wird,
• die Phasensignalkomponente in zwei phasenmodulierte Signalkomponenten mit konstanter Amplitude (SIS) geteilt wird, welche jeweils als eine Phasenkomponente einen auf einem gewichteten Verhältnis der Hüllkurvensignalkomponente zu der gefilterten Hüllkurvensignalkomponente basierenden Phasenwinkel im ersten Teil der Verstärker (AMP) umfassen,
• mindestens eine der Gruppe der zwei phasenmodulierten Signalkomponenten mit konstanter Amplitude und der gefilterten Hüllkurvensignalkomponente in mindestens einem in der Übertragungsvorrichtung (BS) angeordneten elektro-optischen Wandler (EO1, EO2, EO3) von einem elektrischen Signal in ein optisches Signal konvertiert wird,
• die mindestens eine der Gruppe der zwei phasenmodulierten Signalkomponenten mit konstanter Amplitude und der gefilterten Hüllkurvensignalkomponente über mindestens eine optische Verbindung (OF1, OF2, OF3) von der Übertragungsvorrichtung (BS) an die mindestens eine Empfangsvorrichtung (RAH1) übertragen wird,
• die mindestens eine der Gruppe der zwei phasenmodulierten Signalkomponenten mit konstanter Amplitude und der gefilterten Hüllkurvensignalkomponente in mindestens einem in der besagten mindestens einen Empfangsvorrichtung (RAH1) angeordneten opto-elektrischen Wandler (OE1, OE2, OE3) von einem optischen Signal in ein elektrisches Signal konvertiert wird,
• die gefilterte Hüllkurvensignalkomponente in einem zweiten Teil des Verstärkers (AMP), welcher in der besagten mindestens einen Empfangsvorrichtung (RAH1) angeordnet ist, verstärkt wird, wodurch eine verstärkte gefilterte Hüllkurvensignalkomponente erhalten wird,
• und die zwei phasenmodulierten Signalkomponenten mit konstanter Amplitude unter Verwendung der verstärkten gefilterten Hüllkurvensignalkomponente als Versorgungsspannung verstärkt und in dem zweiten Teil des Verstärkers (AMP), welcher in der besagten mindestens einen Empfangsvorrichtung (RAH1) angeordnet ist, kombiniert werden.

**2.** Verfahren nach Anspruch 1, **dadurch gekennzeichnet, dass**

• die besagte mindestens eine der Gruppe der zwei phasenmodulierten Signalkomponenten mit konstanter Amplitude und der gefilterten Hüllkurvensignalkomponente in der Übertragungsvorrichtung (BS) von einem analogen elektrischen Signal in ein digitales elektrisches Signal konvertiert wird,
• die besagte mindestens eine der Gruppe der zwei phasenmodulierten Signalkomponenten mit konstanter Amplitude und der gefilterten Hüllkurvensignalkomponente über die mindestens eine optische Verbindung (OF1, OF2, OF3) als ein digitales optisches Signal übertragen wird,
• und die besagte mindestens eine der Gruppe der zwei phasenmodulierten Signalkomponenten mit konstanter Amplitude und der gefilterten Hüllkurvensignalkomponente in der Empfangsvorrichtung (RAH1) von einem digitalen elektrischen Signal in ein analoges elektrisches Signal konvertiert wird.

**3.** Verfahren nach Anspruch 1 oder 2, **dadurch gekennzeichnet, dass**

• ein Funkfrequenz-Trägersignal in einem weiteren elektro-optischen Wandler (EO4, EO5) in der Übertragungsvorrichtung (BS) von einem elektrischen Signal in ein optisches Funkfrequenz-Trägersignal konvertiert wird,
• mindestens eine der zwei phasenmodulierten Signalkomponenten mit konstanter Amplitude mit dem optischen Funkfrequenz-Trägersignal addiert wird, wodurch ein kombiniertes optisches Signal erhalten wird,
• das kombinierte optische Signal in einem opto-elektrischen Wandler (OE2, OE3) in der besagten mindestens einen Empfangsvorrichtung (RAH1) von einem optischen Signal in ein elektrisches Signal konvertiert wird,
• und die besagte mindestens eine der zwei phasenmodulierten Signalkomponenten mit konstanter Amplitude durch Multiplikation mit dem optischen Funkfrequenz-Trägersignal unter Anwendung einer optischen Überlagerung in dem opto-elektrischen Wandler (OE2, OE3) in den Funkfrequenzbereich aufwärtskonvertiert wird.

4. Verfahren nach Anspruch 1, **dadurch gekennzeichnet, dass**

• ein Ausgangssignal des Verstärkers (AMP) an die Übertragungsvorrichtung (BS) rückgekoppelt wird,
• und der Verstärker (AMP) auf der Basis des besagten rückgekoppelten Ausgangssignales gesteuert oder linearisiert wird.

5. Verfahren nach Anspruch 1, **dadurch gekennzeichnet, dass** die besagte Übertragungsvorrichtung (BS) eine Basisstation und die besagte mindestens eine Empfangsvorrichtung (RAH1) ein entfernter Antennenkopf ist, und dass das besagte  Datensignal über den mindestens einen entfernten Antennenkopf (RAH1) von der Basisstation (BS) an ein Benutzerendgerät (UE1) übertragen wird.

6. Verfahren nach Anspruch 5, **dadurch gekennzeichnet, dass** das Datensignal von der Basisstation (BS) über mindestens zwei entfernte Antennenköpfe (RAH3, RAH4) unter Verwendung von Strahlformung oder Mehrfacheingang-Mehrfachausgang an ein Benutzerendgerät (UE4) übertragen wird.

7. Verfahren nach Anspruch 1 oder 2, **dadurch gekennzeichnet, dass**

• mindestens zwei der Gruppe der zwei phasenmodulierten Signalkomponenten mit konstanter Amplitude und der gefilterten Hüllkurvensignalkomponente in elektro-optischen Wandlern (EO1, EO2, EO3) in der Übertragungsvorrichtung (BS) von elektrischen Signalen in optische Signale konvertiert werden,
• die besagten mindestens zwei der Gruppe der zwei phasenmodulierten Signalkomponenten mit konstanter Amplitude und der gefilterten Hüllkurvensignalkomponente in einem in der Übertragungsvorrichtung (BS) angeordneten optischen Multiplexer (MUX) optisch gemultiplext werden,
• die mindestens zwei der Gruppe der zwei phasenmodulierten Signalkomponenten mit konstanter Amplitude und der gefilterten Hüllkurvensignalkomponente über eine optische Verbindung (OF5) von der Übertragungsvorrichtung (BS) an einen in der mindestens einen Empfangsvorrichtung (RAH1) angeordneten optischen Demultiplexer (DEMUX) übertragen werden,
• und die mindestens zwei der Gruppe der zwei phasenmodulierten Signalkomponenten mit konstanter Amplitude und der gefilterten Hüllkurvensignalkomponente in dem optischen Demultiplexer (DEMUX) optisch gedemultiplext werden.

8. Verstärker (AMP), **wobei**

• ein erster Teil des Verstärkers (AMP) einen ersten Signalpfad für eine erste phasenmodulierte Signalkomponente mit konstanter Amplitude, einen zweiten Signalpfad für eine zweite phasenmodulierte Signalkomponente mit konstanter Amplitude, einen dritten Signalpfad für eine gefilterte Hüllkurvensignalkomponente, und mindestens einen elektro-optischen Wandler (EO1, EO2, EO3) zum Konvertieren mindestens einer der Gruppe der zwei phasenmodulierten Signalkomponenten mit konstanter Amplitude und der gefilterten Hüllkurvensignalkomponente von elektrischen Signalen in optische Signale umfasst,
• ein zweiter Teil des Verstärkers (AMP) mindestens einen opto-elektrischen Wandler (OE1, OE2, OE3) zum Konvertieren mindestens einer der Gruppe der zwei phasenmodulierten Signalkomponenten mit konstanter Amplitude und der gefilterten Hüllkurvensignalkomponente von optischen Signalen in elektrische Signale, eine erste Ausgangsstufe (OS1) zur Verstärkung der ersten phasenmodulierten Signalkomponente, eine zweite Ausgangsstufe (OS2) zur Verstärkung der zweiten phasenmodulierten Signalkomponente, eine dritte Ausgangsstufe (SOS) zur Verstärkung der gefilterten Hüllkurvensignalkomponente, wodurch eine verstärkte gefilterte Hüllkurvensignalkomponente, welche als Versorgungsspannung für die erste Ausgangsstufe (OS1) und die zweite Ausgangsstufe (OS2) verwendet wird, erhalten wird, und einen Kombinator (C) zum Kombinieren der zwei verstärkten phasenmodulierten Signalkomponenten mit konstanter Amplitude umfasst,

• und der besagte erste und der besagte zweite Teil des Verstärkers (AMP) über mindestens eine optische Verbindung (OF1, OF2, OF3) miteinander verbunden sind.

9. Verstärker (AMP) nach Anspruch 8, **dadurch gekennzeichnet, dass** der besagte Kombinator (C) ein Chireix- oder Wilkinson-Kombinator ist.

10. Empfangsvorrichtung (RAH1) zum Empfangen von von einer Übertragungsvorrichtung (BS) gesendeten Signalen, wobei die besagte Empfangsvorrichtung (RAH1) als einen zweiten Teil eines Verstärkers (AMP) umfasst:

> • Mindestens einen opto-elektrischen Wandler (OE1, OE2, OE3) zum Konvertieren mindestens einer einer Gruppe von zwei phasenmodulierten Signalkomponenten mit konstanter Amplitude und einer gefilterten Hüllkurvensignalkomponente von optischen Signalen in elektrische Signale,
> • eine erste Ausgangsstufe (OS1) zur Verstärkung der ersten phasenmodulierten Signalkomponente,
> • eine zweite Ausgangsstufe (OS2) zur Verstärkung der zweiten phasenmodulierten Signalkomponente,
> • eine dritte Ausgangsstufe (SOS) zur Verstärkung der gefilterten Hüllkurvensignalkomponente, wodurch eine verstärkte gefilterte Hüllkurvensignalkomponente erhalten wird, welche als Versorgungsspannung für die erste Ausgangsstufe (OS1) und die zweite Ausgangsstufe (OS2) verwendet wird,
> • einen Kombinator (C) zum Kombinieren der zwei verstärkten phasenmodulierten Signalkomponenten mit konstanter Amplitude.

11. Empfangsvorrichtung (RAH1) nach Anspruch 10, **dadurch gekennzeichnet, dass** die besagte Empfangsvorrichtung (RAH1) ein entfernter Antennenkopf (RAH1) für den Empfang von von einer Basisstation (BS) gesendeten Signalen ist.

12. Kommunikationsnetzwerk (CN) mit mindestens einer Empfangsvorrichtung (RAH1) gemäß Anspruch 11.


**Revendications**

1. Procédé de transmission d'un signal de données à partir d'un dispositif émetteur (BS) vers au moins un dispositif récepteur (RAH1) en utilisant un amplificateur (AMP) pour l'amplification du signal, dans lequel

> • le signal de données est représenté par une composante de signal d'enveloppe et une composante de signal de phase dans une première partie de l'amplificateur (AMP) situé dans le dispositif émetteur (BS),
> • la composante de signal d'enveloppe est filtrée dans un filtre passe-bas, ce qui a pour résultat une composante de signal d'enveloppe filtrée dans la première partie de l'amplificateur (AMP),
> • la composante de signal de phase est divisée en deux composantes de signal modulées en phase d'amplitude constante (SIS) chacune comprenant comme composante de phase un angle de phase basé sur un rapport pondéré entre la composante de signal d'enveloppe et la composante de signal d'enveloppe filtrée dans la première partie de l'amplificateur (AMP),
> • au moins une composante parmi le groupe des deux composantes de signal modulées en phase d'amplitude constante et de la composante de signal d'enveloppe filtrée est convertie à partir d'un signal électrique en un signal optique dans au moins un convertisseur électro-optique (EO1, EO2, EO3) situé dans le dispositif émetteur (BS),
> • l'au moins une composante parmi le groupe des deux composantes de signal modulées en phase d'amplitude constante et de la composante de signal d'enveloppe filtrée est transmise sur au moins une connexion optique (OF1, OF2, OF3) entre le dispositif émetteur (BS) et l'au moins un dispositif récepteur (RAH1),
> • l'au moins une composante parmi le groupe des deux composantes de signal modulées en phase d'amplitude constante et de la composante de signal d'enveloppe filtrée est convertie à partir d'un signal optique en un signal électrique dans au moins un convertisseur opto-électrique (OE1, OE2, OE3) situé dans ledit au moins un dispositif récepteur (RAH1),
> • la composante de signal d'enveloppe filtrée est amplifiée dans une deuxième partie de l'amplificateur (AMP) qui est situé dans ledit au moins un dispositif récepteur (RAH1), ce qui a pour résultat une composante de signal d'enveloppe filtrée amplifiée,
> • et les deux composantes de signal modulées en phase d'amplitude constante sont amplifiées en utilisant la composante de signal d'enveloppe filtrée amplifiée comme tension d'alimentation et sont combinées dans la deuxième partie de l'amplificateur (AMP) qui est situé dans ledit au moins un dispositif récepteur (RAH1).

**2.** Procédé selon la revendication 1, **caractérisé en ce que**

• ladite au moins une composante parmi le groupe des deux composantes de signal modulées en phase d'amplitude constante et de la composante de signal d'enveloppe filtrée est convertie à partir d'un signal électrique analogique en un signal électrique numérique dans le dispositif émetteur (BS),
• ladite au moins une composante parmi le groupe des deux composantes de signal modulées en phase d'amplitude constante et de la composante de signal d'enveloppe filtrée est transmise comme un signal optique numérique sur l'au moins une connexion optique (OF1, OF2, OF3),
• et ladite au moins une composante parmi le groupe des deux composantes de signal modulées en phase d'amplitude constante et de la composante de signal d'enveloppe filtrée est convertie à partir d'un signal électrique numérique en un signal électrique analogique dans le dispositif récepteur (RAH1),

**3.** Procédé selon la revendication 1 ou 2, **caractérisé en ce que**

• un signal de porteuse radioélectrique est converti à partir d'un signal électrique en un signal de porteuse radioélectrique optique dans un convertisseur électro-optique (EO4, EO5) supplémentaire dans le dispositif émetteur (BS),
• au moins une des deux composantes de signal modulées en phase d'amplitude constante est ajoutée au signal de porteuse radioélectrique optique, ce qui a pour résultat un signal optique combiné,
• le signal optique combiné est converti à partir d'un signal optique en un signal électrique dans un convertisseur opto-électrique (OE2, OE3) dans ledit au moins un dispositif récepteur (RAH1),
• et ladite au moins une des deux composantes de signal modulées en phase d'amplitude constante est transposée dans le domaine des radiofréquences par multiplication avec le signal de porteuse radioélectrique optique en appliquant un hétérodynage optique dans le convertisseur opto-électrique (OE2, OE3).

**4.** Procédé selon la revendication 1, **caractérisé en ce que**

• un signal de sortie de l'amplificateur (AMP) est renvoyé au dispositif émetteur (BS),
• et, sur la base dudit signal de sortie renvoyé, l'amplificateur (AMP) est commandé ou linéarisé.

**5.** Procédé selon la revendication 1, **caractérisé en ce que** ledit dispositif émetteur (BS) est une station de base et ledit au moins un dispositif récepteur (RAH1) est une tête d'antenne distante et ledit signal de données est transmis depuis la station de base (BS) à un terminal d'utilisateur (UE1) par l'intermédiaire de l'au moins une tête d'antenne distante (RAH1).

**6.** Procédé selon la revendication 5, **caractérisé en ce que** le signal de données provenant de la station de base (BS) est transmis à un terminal d'utilisateur (UE4) par l'intermédiaire d'au moins deux têtes d'antenne distantes (RAH3, RAH4) en appliquant la formation de faisceau ou les entrées multiples, sorties multiples.

**7.** Procédé selon la revendication 1 ou la revendication 2, **caractérisé en ce que**

• au moins deux composantes parmi le groupe des deux composantes de signal modulées en phase d'amplitude constante et de la composante de signal d'enveloppe filtrée sont converties à partir de signaux électriques en signaux optiques dans des convertisseurs électro-optiques (EO1, EO2, EO3) dans le dispositif émetteur (BS),
• lesdites au moins deux composantes parmi le groupe des deux composantes de signal modulées en phase d'amplitude constante et de la composante de signal d'enveloppe filtrée sont multiplexées optiquement dans un multiplexeur optique (MUX) situé dans le dispositif émetteur (BS),
• les au moins deux composantes parmi le groupe des deux composantes de signal modulées en phase d'amplitude constante et de la composante de signal d'enveloppe filtrée sont transmises sur une connexion optique (OF5) entre le dispositif émetteur (BS) et un démultiplexeur optique (DEMUX) situé dans l'au moins un dispositif récepteur (RAH1),
• et les au moins deux composantes parmi le groupe des deux composantes de signal modulées en phase d'amplitude constante et de la composante de signal d'enveloppe filtrée sont démultiplexées optiquement dans le démultiplexeur optique (DEMUX).

**8.** Amplificateur (AMP) **dans lequel**

• une première partie de l'amplificateur (AMP) comprend un premier chemin de signal pour une première composante de signal modulée en phase d'amplitude constante, un deuxième chemin de signal pour une deuxième composante de signal modulée en phase d'amplitude constante, un troisième chemin de signal pour une composante de signal d'enveloppe filtrée, et au moins un convertisseur électro-optique (EO1, EO2, EO3) pour convertir au moins une composante parmi le groupe des deux composantes de signal modulées en phase d'amplitude constante et de la composante de signal d'enveloppe filtrée à partir de signaux électriques en signaux optiques,

• une deuxième partie de l'amplificateur (AMP) comprend au moins un convertisseur opto-électrique (OE1, OE2, OE3) pour convertir au moins une composante parmi les deux composantes de signal modulées en phase d'amplitude constante et la composante de signal d'enveloppe filtrée à partir de signaux optiques en signaux électriques, un premier étage de sortie (OS1) pour l'amplification de la première composante de signal modulée en phase, un deuxième étage de sortie (OS2) pour l'amplification de la deuxième composante de signal modulée en phase, un troisième étage de sortie (SOS) pour l'amplification de la composante de signal d'enveloppe filtrée qui a pour résultat une composante de signal d'enveloppe filtrée amplifiée qui est utilisée comme tension d'alimentation pour le premier étage de sortie (OS1) et le deuxième étage de sortie (OS2), et un combineur (C) pour combiner les deux composantes de signal modulées en phase amplifiées d'amplitude constante,

• et lesdites première et deuxième parties de l'amplificateur (AMP) sont connectées par au moins une connexion optique (OF1, OF2, OF3).

9. Amplificateur (AMP) selon la revendication 8, **caractérisé en ce que** ledit combineur (C) est un combiner Chireix ou Wilkinson.

10. Dispositif récepteur (RAM) pour la réception de signaux envoyés depuis un dispositif émetteur (BS) **dans lequel** ledit dispositif récepteur (RAH1) comprend comme deuxième partie d'un amplificateur (AMP)

• au moins un convertisseur opto-électrique (OE1, OE2, OE3) pour convertir au moins une composante parmi un groupe de deux composantes de signal modulées en phase d'amplitude constante et d'une composante de signal d'enveloppe filtrée à partir de signaux optiques en signaux électriques,
• un premier étage de sortie (OS1) pour l'amplification de la première composante de signal modulée en phase,
• un deuxième étage de sortie (OS2) pour l'amplification de la deuxième composante de signal modulée en phase,
• un troisième étage de sortie (SOS) pour l'amplification de la composante de signal d'enveloppe filtrée qui a pour résultat une composante de signal d'enveloppe filtrée amplifiée qui est utilisée comme tension d'alimentation pour le premier étage de sortie (OS1) et le deuxième étage de sortie (OS2),
• et un combineur (C) pour combiner les deux composantes de signal modulées en phase amplifiées d'amplitude constante.

11. Dispositif récepteur (RAH1) selon la revendication 10, **caractérisé en ce que** ledit dispositif récepteur (RAH1) est une tête d'antenne distante (RAH1) pour la réception de signaux envoyés depuis une station de base (BS).

12. Réseau de communication (CN), comprenant au moins un dispositif récepteur (RAH1) selon la revendication 11.

Fig. 1

Fig. 2

Fig. 3

Fig. 4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1553791 B1
- US 20030090777 A1
- US 5777771 A